# EUROPÄISCHE PATENTSCHRIFT

(11) **EP 3 393 847 B1**
(45) Veröffentlichungstag und Bekanntmachung des Hinweises auf die Patenterteilung: **27.11.2019**
(21) Anmeldenummer: 16809817.6
(22) Anmeldetag: 13.12.2016
(51) Int. Cl.: B60N 2/07

(54) **LAGERKÄFIG UND SITZSCHIENENPAAR FÜR EINEN FAHRZEUGSITZ**
BEARING CAGE AND SEAT RAIL PAIR FOR A VEHICLE SEAT
CAGE DE ROULEMENT ET PAIRE DE RAILS DE SIÈGE POUR SIÈGE DE VÉHICULE

(30) Priorität: 21.12.2015 DE 102015226266
(43) Veröffentlichungstag der Anmeldung: 31.10.2018
(73) Patentinhaber: Adient Luxembourg Holding S.à r.l., 1855 Luxembourg (LU)
(72) Erfinder: QUAST, Ingo, 40477 Düsseldorf (DE); SPRENGER, Erik, 42929 Wermelskirchen (DE)
(74) Vertreter: Liedtke & Partner Patentanwälte
(86) Internationale Anmeldenummer: PCT/EP2016/080819
(87) Internationale Veröffentlichungsnummer: WO 2017/108504

(56) Entgegenhaltungen:
- EP-A1- 2 202 115
- DE-A1-102011 081 107
- DE-B3-102011 115 948

## Beschreibung

Die Erfindung betrifft einen Lagerkäfig für ein Sitzschienenpaar eines Fahrzeugsitzes, insbesondere eines Kraftfahrzeugsitzes.

Die Erfindung betrifft weiterhin ein Sitzschienenpaar für einen Fahrzeugsitz, insbesondere für einen Kraftfahrzeugsitz, umfassend zumindest einen solchen Lagerkäfig.

Die Erfindung betrifft weiterhin einen Fahrzeugsitz, umfassend zumindest ein solches Sitzschienenpaar.

Sitzschienenpaare zur Längsverstellung eines Fahrzeugsitzes sind allgemein bekannt und umfassen eine Unterschiene und eine Oberschiene, die relativ zueinander längs verschiebbar angeordnet sind. Hierzu sind Wälzkörper, wie zum Beispiel Rollen, zwischen der Unterschiene und der Oberschiene vorgesehen. Die Wälzkörper sind in einem Lagerkäfig angeordnet. Zudem ist eine Verriegelung vorgesehen, die im gesperrten oder verriegelten Zustand in zumindest eine Seitenwand der Unterschiene und Oberschiene sperrend eingreift.

Solche Sitzschienenpaare sind aus der DE 10 2011 081 107 A1, EP 2 202 115 A1, US 2010/0320353 A1, US 2005/0056761 A1 und US 2009/0102261 A1 bekannt.

Die DE 10 2011 115 948 B3 beschreibt einen längseinstellbaren Fahrzeugsitz mit einem Sitzschienenpaar, umfassend eine strukturfeste erste Sitzschiene, eine in dieser ersten Sitzschiene geführte, mit dem Fahrzeugsitz verbundene zweite Sitzschiene und in Kugelhaltern angeordnete Kugeln, welche zwischen der ersten Sitzschiene und der zweiten Sitzschiene angeordnet sind, um die Reibung zu vermindern. Dabei bildet die erste Sitzschiene eine Kugellaufbahn, entlang welcher die Kugeln rollen. Ferner umfasst das Sitzschienenpaar einen ersten Endanschlag und einen zweiten Endanschlag, welche eine Verfahrbarkeit des Sitzschienenpaares begrenzen.

Aufgabe der vorliegenden Erfindung ist es, einen gegenüber dem Stand der Technik verbesserten Lagerkäfig für ein Sitzschienenpaar eines Fahrzeugsitzes, ein verbessertes Sitzschienenpaar sowie einen verbesserten Fahrzeugsitz anzugeben.

Hinsichtlich des Lagerkäfigs wird die Aufgabe erfindungsgemäß durch die im Anspruch 1 angegebenen Merkmale, hinsichtlich des Sitzschienenpaares durch die im Anspruch 5 angegebenen Merkmale und hinsichtlich des Fahrzeugsitzes durch die im Anspruch 12 angegebenen Merkmale gelöst.

Vorteilhafte Ausgestaltungen der Erfindung sind Gegenstand der Unteransprüche.

Der erfindungsgemäße Lagerkäfig für ein Sitzschienenpaar eines Fahrzeugsitzes umfasst zwei miteinander verbundene axialsymmetrisch ausgebildete Käfigelemente zur Aufnahme einer Anzahl von Wälzkörpern und ein an zugewandten Längsseiten der Käfigelemente zwischen diesen angeordnetes, parallel zur Symmetrieachse verlaufendes und mechanisch flexibel ausgebildetes Verbindungselement, wobei das Verbindungselement als Feder ausgebildet ist und die Käfigelemente um die Symmetrieachse schwenkbare Federschenkel bilden.

Dabei sind die Käfigelemente in einem ungespannten Zustand des Verbindungselements insbesondere derart angeordnet, dass das Verbindungselement im montierten Zustand des Lagerkäfigs im Sitzschienenpaar gespannt ist.

Hierdurch kann eine Fixierung des Lagerkäfigs innerhalb einer der Schienen des Sitzschienenpaares bereits vor der Montage der anderen Schiene erzielt werden. Weiterhin ist der Lagerkäfig aufgrund der Federwirkung und somit möglichen Vorspannung bei der Montage im montierten Zustand zuverlässig in seiner Einbaulage fixiert.

In einer möglichen Ausgestaltung ist das Verbindungselement im ungespannten Zustand derart ausgebildet, dass zwischen Vorderseiten von parallel zu der Symmetrieachse verlaufenden Flachseiten des Verbindungselements ein Winkel von mehr als 180° und an den Vorderseiten gegenüberliegenden Rückseiten ein Winkel von weniger als 180° ausgebildet ist. Hierdurch sind die Käfigelemente im ungespannten Zustand des Verbindungselements im Bereich der Rückseiten einander zugewandt angeordnet.

In einer weiteren möglichen Ausgestaltung des Lagerkäfigs sind einseitig an parallel zu der Symmetrieachse verlaufenden Flachseiten des Verbindungselements jeweils Erhebungen ausgebildet. Mittels der Erhebungen wird erreicht, dass im montierten Zustand des Lagerkäfigs mittels eines zumindest an den Erhebungen anliegenden Abschnitts einer der Schienen des Sitzschienenpaares derart eine Kraft auf das Verbindungselement ausübt, dass zwei zueinander gerichtete resultierende Kräfte auf die Käfigelemente erzeugt werden. Die Kräfte resultieren aus einem verformten Zustand im Bereich des Verbindungselements des Lagerkäfigs nach einer Montage desselben am Sitzschienenpaar, wobei der durch die Montage verformte Bereich das Bestreben hat, wie eine Feder in einen werkzeugfallenden oder entspannten Zustand zurückzukehren, d. h. sich zurückzuverformen. Im montierten Zustand des Lagerkäfigs sind Endabschnitte der beiden Käfigelemente im Wesentlichen senkrecht zu den Flachseiten des Verbindungselements angeordnet und liegen sich gegenüber. Die resultierenden Kräfte wirken dabei in im Wesentlichen entgegengesetzten Richtungen vom jeweiligen Käfigelement zu dem gegenüberliegenden Käfigelement. Hierdurch wird in vorteilhafter Weise sichergestellt, dass zwischen zumindest der relativ zum Lagerkäfig verschiebbaren Schiene des Sitzschienenpaares und dem Lagerkäfig ein Spaltmaß oder Freiraum vorhanden ist. Somit wird ermöglicht, dass die relativ zum Lagerkäfig verschiebbare Schiene beispielsweise zum Eingriff einer Verriegelungsvorrichtung in die Schiene vorgesehene Materialaussparungen und/oder -vertiefungen aufweist und ein Kontakt und somit ein Eingreifen und Verhaken der Käfigelemente in den Materialaussparungen und/oder -vertiefungen vermieden werden.

Beispielsweise ist das Verbindungselement als so genanntes Filmgelenk oder Filmscharnier ausgebildet, wodurch eine Anzahl mechanischer Teile des Lagerkäfigs verringert wird.

In einer möglichen Ausgestaltung des Lagerkäfigs sind die Erhebungen jeweils als Kugelsegment ausgebildet. Diese Ausbildung als Kugelsegment stellt unabhängig von einer Ausformung des anliegenden Abschnitts der Schiene einen Kontakt mit dem Abschnitt sicher.

In einer weiteren möglichen Ausgestaltung des Lagerkäfigs sind die Käfigelemente und das Verbindungselement mit den Erhebungen in Längsrichtung und Querrichtung symmetrisch ausgebildet. Somit kann ein falscher Verbau des Lagerkäfigs bei einer Montage des Sitzschienenpaares vermieden werden. Somit ist eine Fehlervermeidung gemäß dem so genannten "Poka-Yoke-Prinzip" möglich.

Das erfindungsgemäße Sitzschienenpaar für einen Fahrzeugsitz, insbesondere einen Kraftfahrzeugsitz, umfasst eine Unterschiene und eine relativ zur Unterschiene in Schienenlängsrichtung verschiebbar geführte Oberschiene, wobei die Unterschiene und die Oberschiene sich mit ihren Profilen gegenseitig hintergreifen. Weiterhin umfasst das Sitzschienenpaar zumindest einen zwischen der Unterschiene und der Oberschiene angeordneten erfindungsgemäßen Lagerkäfig oder eine Ausgestaltung desselben mit einer Mehrzahl von aufgenommenen Wälzkörpern, welche zwischen der Unterschiene und der Oberschiene in einem Zusammenwirkungsbereich angeordnet sind, wobei das Verbindungselement im montierten Zustand des Lagerkäfigs gespannt ist.

Aufgrund der Anordnung der Wälzkörper in dem Lagerkäfig ist eine feste Positionierung der Wälzkörper zueinander, welche beispielsweise als Rollen oder Kugeln ausgebildet sind, sichergestellt. Aufgrund der Anordnung des Lagerkäfigs mit gespanntem Verbindungselement und der daraus resultierenden Federwirkung ist der Lagerkäfig im montierten Zustand zuverlässig in seiner Einbaulage definiert.

Bei der Ausbildung des Lagerkäfigs mit den Erhebungen und der daraus resultierenden Vermeidung eines ungewollten Kontakts, d. h. somit eines Eingreifens und Verhakens der Käfigelemente in Materialaussparungen und/oder-vertiefungen der relativ zum Lagerkäfig verschiebbaren Schiene, ist eine zuverlässige und verschleißarme relative Verschiebung der Schienen zueinander ermöglicht. Auch wird ein Blockieren vermieden. Die in der relativ zum Lagerkäfig verschiebbaren Schiene eingebrachten Materialaussparungen und/oder -vertiefungen ermöglichen beispielsweise einen Eingriff einer Verriegelungsvorrichtung in die Schiene und eine Material-, Gewichts- und Kostenreduktion sowie eine Einbringung von Endanschlägen in einer vorteilhaften Position und Lage.

In einer möglichen Ausgestaltung des Sitzschienenpaares ist der Lagerkäfig mit den Wälzkörpern zwischen einer Innenseite der Unterschiene und einer Außenseite der innerhalb der Unterschiene geführten Oberschiene angeordnet.

In einer weiteren möglichen Ausgestaltung des Sitzschienenpaares sind an der Innenseite der Unterschiene gebogene Kontaktflächenbereiche für die Wälzkörper und der Außenseite der Oberschiene gebogene und/oder flache Kontaktflächenbereiche für die Wälzkörper ausgebildet, wobei jeweils ein Kontaktflächenbereich der Unterschiene jeweils einem Kontaktflächenbereich der Oberschiene gegenüberliegt. Dabei ermöglichen die Kontaktflächenbereiche eine optimierte Führung der Wälzkörper an der Unterschiene und der Oberschiene.

Gemäß einer möglichen Weiterbildung des Sitzschienenpaares ist der Lagerkäfig mit den Wälzkörpern derart zwischen der Innenseite der Unterschiene und der Außenseite der innerhalb der Unterschiene geführten Oberschiene angeordnet, dass ein zwischen den gebogenen Kontaktflächen der Unterschiene ausgebildeter flacher Abschnitt der Innenseite der Unterschiene parallel zu den Flachseiten des Verbindungselements des Lagerkäfigs verläuft und ein zwischen zwei Kontaktflächenbereichen der Oberschiene ausgebildeter gebogener Abschnitt derselben den Flachseiten und den Erhebungen zugewandt ist und zumindest an den Erhebungen anliegt. Diese Anordnung ermöglicht, dass der gebogene Abschnitt der Außenseite der Oberschiene gemäß einer weiteren Ausgestaltung die Kraft auf die Erhebungen ausübt, welche einer Federkraft des als Feder ausgebildeten Verbindungselements entgegenwirkt und die zwei zueinander gerichteten resultierenden Kräfte auf die Käfigelemente erzeugt.

Eine Weiterbildung des Sitzschienenpaares sieht vor, dass die Erhebungen auf den Flachseiten in Richtung einer von dem im montierten Zustand gespannten Verbindungselement erzeugten Federkraft gerichtet sind. Somit ist eine der Federkraft entgegengesetzte Krafteinleitung mittels einer der beiden Schienen des Schienenpaares optimiert.

Eine mögliche Ausgestaltung des Sitzschienenpaares sieht vor, dass die Unterschiene und die Oberschiene jeweils im Wesentlichen ein U-förmiges Profil aufweisen, wobei Schenkelenden der Unterschiene und Oberschiene derart mehrfach gebogen sind und einander hintergreifen, dass zwei seitliche innen liegende Zusammenwirkungsbereiche zwischen der Unterschiene und der Oberschiene gebildet sind, wobei in jedem Zusammenwirkungsbereich jeweils ein Lagerkäfig mit einer Mehrzahl von aufgenommenen Wälzkörpern angeordnet ist. Die Hintergreifung oder Verhakung der Oberschiene und der Unterschiene ist dabei beispielsweise derart gestaltet, dass in den Zusammenwirkungsbereichen in Bezug auf eine Schienenquerrichtung die Endabschnitte der Oberschiene schräg geneigt sind und die Endabschnitte der Unterschiene vertikal und horizontal verlaufen. Hierdurch weist das Sitzschienenpaar ein verbessertes Crashverhalten, insbesondere eine hohe Ausschälkraft (engl. Peel Strength) und eine verbesserte Stabilität, insbesondere eine seitliche Abstützung für die Verriegelung und vertikale Stabilität, insbesondere vertikale Abstützung der Oberschiene auf der Unterschiene, auf.

Der erfindungsgemäße Fahrzeugsitz umfasst zumindest ein erfindungsgemäßes Sitzschienenpaar oder Ausgestaltungen desselben. Ein mit zwei erfindungsgemäßen Sitzschienenpaaren ausgestatteter Fahrzeugsitz wird vorzugsweise in einem Kraftfahrzeug eingesetzt, und zwar in der Regel als Vordersitz. Das als Längseinsteller dienende Sitzschienenpaar wird vorzugsweise so angebracht, dass die Unterschiene die fahrzeugstrukturfeste Führungsschiene und die Oberschiene die sitzstrukturfeste Gleitschiene bildet. Die Funktionen der beiden Sitzschienen können aber auch genau umgekehrt sein. Aufgrund der Ausbildung der Sitzschienenpaare mit den Lagerkäfigen und Wälzkörpern ist eine zuverlässige Längsverstellung des Fahrzeugsitzes mit geringem Kraftaufwand und geringem Verschleiß realisierbar.

Ausführungsbeispiele der Erfindung werden anhand von Zeichnungen näher erläutert. Dabei zeigen:
- Figur 1: schematisch eine perspektivische Ansicht eines Fahrzeugsitzes,
- Figur 2: schematisch eine Schnittdarstellung eines Sitzschienenpaares in perspektivischer Ansicht,
- Figur 3: schematisch eine Draufsicht auf eine Stirnseite des Sitzschienenpaares,
- Figur 4: schematisch eine Draufsicht auf eine Stirnseite eines Lagerkäfigs in einer ersten Stellung,
- Figur 5: schematisch eine Draufsicht auf die Stirnseite des Sitzschienenpaares gemäß Figur 3 und wirkende Kräfte,
- Figur 6: schematisch eine perspektivische Ansicht des Lagerkäfigs gemäß Figur 4 mit mehreren Wälzkörpern in einer zweiten Stellung,
- Figur 7: schematisch eine perspektivische Ansicht eines vergrößerten Ausschnitts des Lagerkäfigs gemäß Figur 6 und
- Figur 8: schematisch eine Draufsicht auf eine Stirnseite des Lagerkäfigs gemäß Figur 6.

Einander entsprechende Teile sind in allen Figuren mit den gleichen Bezugszeichen versehen.

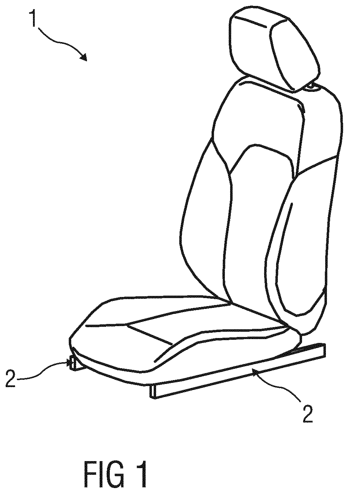

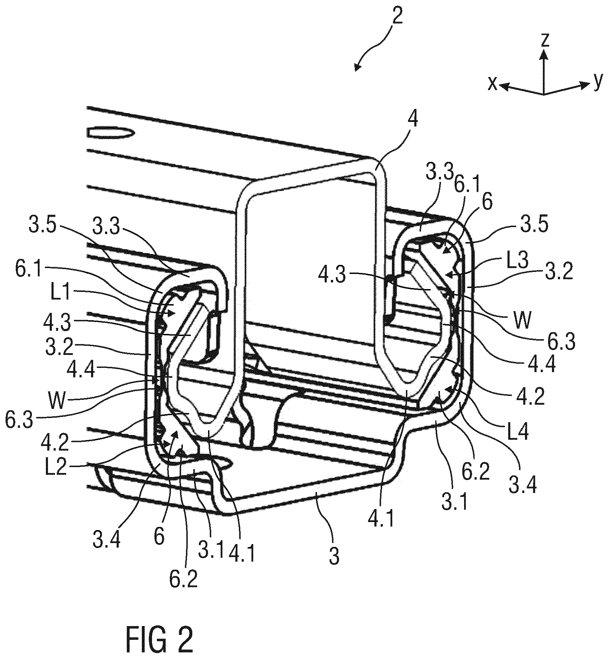

In Figur 1 ist in einer perspektivischen Ansicht ein Fahrzeugsitz 1, insbesondere ein Vordersitz für ein Kraftfahrzeug, dargestellt. Dieser ist mit zwei Sitzschienenpaaren 2 zur Längsverstellung ausgestattet. Die Sitzschienenpaare 2 sind derart am Fahrzeugsitz angebracht, dass jeweils eine in Figur 2 näher dargestellte Unterschiene 3 eine fahrzeugstrukturfeste Führungsschiene und jeweils eine ebenfalls in Figur 2 näher dargestellte Oberschiene 4 die sitzstrukturfeste Gleitschiene bildet. Die Funktionen der Unterschiene 3 und Oberschiene 4 können aber auch genau umgekehrt sein.

Die zwei Sitzschienenpaare 2 sind im Wesentlichen gleichartig aufgebaut. Im Nachfolgenden wird daher nur ein Sitzschienenpaar 2 näher beschrieben.

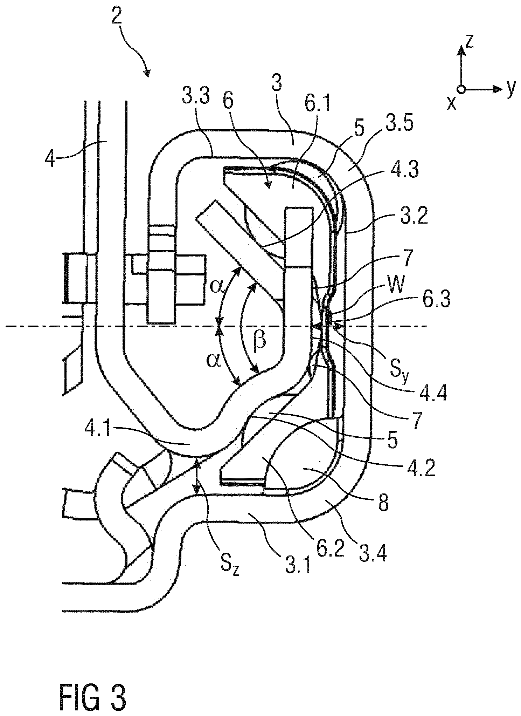

Die Figuren 2 und 3 zeigen Ausschnitte des Sitzschienenpaares 2 in verschiedenen Ansichten.

Das Sitzschienenpaar 2 umfasst die Unterschiene 3 und die relativ zur Unterschiene 3 in Schienenlängsrichtung X verschiebbar geführte Oberschiene 4, welche sich mit ihren Profilen gegenseitig hintergreifen.

Dabei weisen die Unterschiene 3 und die Oberschiene 4 jeweils im Wesentlichen ein U-förmiges Profil auf, deren Schenkelenden derart mehrfach gebogen sind und einander hintergreifen, dass zwei seitliche innen liegende Zusammenwirkungsbereiche W zwischen der Unterschiene 3 und der Oberschiene 4 gebildet sind.

Die Hintergreifung oder Verhakung der Oberschiene 4 und der Unterschiene 3 ist derart gestaltet, dass in den Zusammenwirkungsbereichen W in Bezug auf eine Schienenquerrichtung Y Endabschnitte der Oberschiene 4 schräg geneigt sind und Endabschnitte der Unterschiene 3 vertikal und horizontal verlaufen.

Hierdurch weist das Sitzschienenpaar 2 ein verbessertes Crashverhalten (hohe Ausschälkraft (engl. Peel Strength) und eine verbesserte Stabilität, insbesondere eine seitliche Abstützung für eine Verriegelung der Oberschiene 4 relativ zur Unterschiene 3 und vertikale Stabilität, insbesondere vertikale Abstützung der Oberschiene 4 auf der Unterschiene 3, auf.

Des Weiteren sind die Unterschiene 3 und die Oberschiene 4 unter Einhaltung zumindest eines vorgegebenen Spaltmaßes S_{z} und/oder S_{y} zwischen diesen ausgebildet. Insbesondere sind die Endabschnitte der Profile der Unterschiene 3 und der Oberschiene 4 derart umgeformt, dass im jeweiligen Zusammenwirkungsbereich W definierte Spaltmaße S_{z}, S_{y} zwischen diesen bezogen auf eine Gesamthöhe bzw. die Gesamtbreite des Sitzschienenpaares 2 eingehalten sind.

Ferner sind die Endabschnitte der Unterschiene 3 und der Oberschiene 4 derart umgebogen, dass sich in einem Lastfall in Schienenhochrichtung Z, d. h. in vertikaler Richtung, die Oberschiene 4 mit einem gebogenen Abschnitt 4.1, insbesondere einem spitz gebogenen und nach unten gebogenen Endabschnitt, auf einem dem gebogenen Abschnitt 4.1 gegenüberliegenden ebenen horizontalen Abschnitt 3.1 der Unterschiene 3 abstützen kann. Hierdurch ist eine Oberschienenstabilität im Lastfall verbessert.

In den Zusammenwirkungsbereichen W zwischen der Unterschiene 3 und der Oberschiene 4 sind Wälzkörper 5, insbesondere Kugeln, zur Längsverstellung der Oberschiene 4 relativ zur Unterschiene 3 angeordnet. Die Wälzkörper 5 sind in einem Lagerkäfig 6 angeordnet, welcher an der Oberschiene 4 befestigt und relativ mit dieser zu der Unterschiene 3 verschiebbar ist.

Zur Bildung von Laufbahnen L1 bis L4 für die Wälzkörper 5 sind an der Innenseite der Unterschiene 3 zwischen dem flachen Abschnitt 3.1 und einem senkrecht zu diesem angeordneten weiteren flachen Abschnitt 3.2 sowie zwischen diesem Abschnitt 3.2 und einem dem Abschnitt 3.1 parallel gegenüberliegenden weiteren flachen Abschnitt 3.3 gebogene Kontaktflächenbereiche 3.4, 3.5 für die Wälzkörper 5 ausgebildet. Weiterhin ist zur Bildung der Laufbahnen L1 bis L4 an der Außenseite der Oberschiene 4 ein gebogener Kontaktflächenbereich 4.2 und ein flacher Kontaktflächenbereich 4.3 für die Wälzkörper 5 ausgebildet, wobei jeweils ein Kontaktflächenbereich 4.2, 4.3 der Oberschiene 4 jeweils einem Kontaktflächenbereich 3.4, 3.5 der Unterschiene 3 gegenüberliegt.

Dabei ist je oberer Laufbahn L1 und L3 und unterer Laufbahn L2 und L4 ein gemeinsamer Lagerkäfig 6 für die Wälzkörper 5 vorgesehen. Die im jeweiligen Lagerkäfig 6 angeordneten Wälzkörper 5 weisen einen gleichen Durchmesser auf. Dabei können die Wälzkörper 5 aller Laufbahnen L1 bis L4 einen gleichen Durchmesser aufweisen. Alternativ kann sich der Durchmesser der Wälzkörper 5 für die oberen Laufbahnen L1, L3 vom Durchmesser der Wälzkörper 5 für die unteren Laufbahnen L2, L4 unterscheiden. Hierbei weisen die Wälzkörper 5 der unteren Laufbahnen L2, L4 beispielsweise einen größeren Durchmesser auf.

Die unterschiedlichen Durchmesser der Wälzkörper 5 der oberen Laufbahnen L1, L3 zu den unteren Laufbahnen L2, L4 ermöglichen einen Ausgleich von Fertigungstoleranzen und eine Steuerung möglicher Verschiebekräfte infolge mechanischer Beanspruchung des Sitzschienenpaares 2.

Die Unterschiene 3 und die Oberschiene 4 sind derart umgebogen, dass in den zwischen diesen gebildeten Laufbahnen L1 bis L4 ebene Kontaktflächenbereiche 4.3 und gebogene Kontaktflächenbereiche 3.4, 3.5, 4.2 für die Wälzkörper 5 ausgebildet sind.

Dabei weist das Sitzschienenpaar 2 je Profil eine gleiche Anzahl von Umformungen auf. Insbesondere weisen die Profile für Unterschiene 3 und Oberschiene 4 jeweils zehn derart aufeinander abgestimmte Umformungen auf, dass die Unterschiene 3 und die Oberschiene 4 in Z-X-Ebene und/oder in Z-Y-Ebene symmetrisch ausgestaltet sind. Hierbei ist die Unterschiene 3 mehrfach gebogen, wobei ein jeweiliger maximaler Biegewinkel 90° beträgt.

So sind die Endabschnitte der Oberschiene 4 für die Laufbahnen L1 bis L4 in den beiden gegenüberliegenden Zusammenwirkungsbereichen W mit einem Anstellwinkel α in einem Bereich von 40° bis 50°, insbesondere von 45°, umgeformt und gebogen und bilden in diesen schräg geneigten Endabschnitten Kontaktflächenbereiche 4.2, 4.3 für die Wälzkörper 5 der Laufbahnen L1 bis L4.

Den schräg, insbesondere um 45° zur Y-Ebene schräg geneigten Endabschnitten der Oberschiene 4 liegen um 90° gebogene Endabschnitte der Unterschiene 3 gegenüber.

Für die oberen Laufbahnen L1, L3 weisen die gegenüberliegenden gebogenen Endabschnitte der Unterschiene 3 einen Radius auf, der in etwa dem Radius der betreffenden Laufbahn L1 bzw. L3 entspricht. Die Endabschnitte der Oberschiene 4 sind eben geformt und schräg geneigt mit einem Anstellwinkel α von ca. 45° in Bezug auf die Y-Achse (= Schienenquerrichtung Y).

Für die unteren Laufbahnen L2 und L4 weisen die gebogenen Endabschnitte der Oberschiene 4 und der Unterschiene 3 einen Radius auf, der in etwa dem Radius der betreffenden Laufbahnen L2 bzw. L4 entspricht. Dabei sind die gebogenen Endabschnitte der Oberschiene 4 schräg geneigt mit einem Anstellwinkel α von ca. 45° in Bezug auf die Y-Achse.

Eine solche Ausbildung der oberen und unteren Laufbahnen L1 bis L4 ermöglicht, dass im Lastfall bei durch den Radius vorgegebener gleichzeitig veränderter Krafteinleitungsrichtung im Kontakt der Oberschiene 4 zu den Wälzkörpern 5 ein Kontaktpunkt in diesen Laufbahnen L1 bis L4 derart nach außen wandert, dass sich ein Kraftvektor der Senkrechten nähert. Hierdurch ist bei Last die Stabilität des Sitzschienenpaares 2 in Schienenhochrichtung Z verbessert.

Wie oben bereits ausgeführt, können die Durchmesser der Wälzkörper 5 der oberen Laufbahnen L1, L3 und die Durchmesser der Wälzkörper 5 der unteren Laufbahnen L2, L4 verschieden sein. Die Variation der Durchmesser der Wälzkörper 5 dient der Lagekorrektur der Oberschiene 4 und der Einstellung der Spaltmaße S_{z}, S_{y} und somit des Abstandes zwischen den Profilen der Oberschiene 4 und Unterschiene 3.

Die beschriebene Neigung der Endabschnitte der Oberschiene 4 führt zu primär horizontalem Toleranzausgleich über Zusammenfederung in Schienenquerrichtung Y des Profils der Oberschiene 4 gegenüber vertikalem Toleranzausgleich bei herkömmlichen Schienenpaaren.

Die Endabschnitte der Unterschiene 3 und der Oberschiene 4 sind weiterhin derart umgebogen, dass je Schienenseite zwei Laufbahnen L1, L3 und L2, L4 gebildet sind. Die Laufbahnen L1 und L2 stellen die oberen Laufbahnen und die Laufbahnen L2 und L4 die unteren Laufbahnen in Bezug auf die Schienenhochrichtung Z dar. Die mit dem Anstellwinkel α schräg geneigten Endabschnitte einer jeden Schienenseite der Oberschiene 4 sind in einem Winkel β von 80° bis 100°, insbesondere in einem Winkel β von 90°, zueinander angeordnet.

Mit anderen Worten: Die mit dem Anstellwinkel α schräg geneigten Endabschnitte einer jeden Schienenseite der Oberschiene 4 sind derart ausgebildet, dass diese die Schenkel eines gleichschenkligen Dreiecks bilden.

Die auf den gegenüberliegenden Schienenseiten ausgebildeten Endabschnitte von Unterschiene 3 und Oberschiene 4 mit den Kontaktflächenbereichen 3.4, 3.5, 4.2, 4.3 in den Laufbahnen L1 bis L4 sind in Bezug auf die eine Symmetrieachse bildende Z-Achse in Schienenhochrichtung Z zueinander gespiegelt ausgebildet.

Mit anderen Worten: Die Unterschiene 3 und die Oberschiene 4 sind symmetrisch zu mindestens einer Ebene des Sitzschienenpaares 2 ausgebildet, welche durch die Schienenlängsrichtung X und die Schienenhochrichtung Z, d. h die Vertikale, und/oder durch die Schienenquerrichtung Y und die Schienenhochrichtung Z definiert ist.

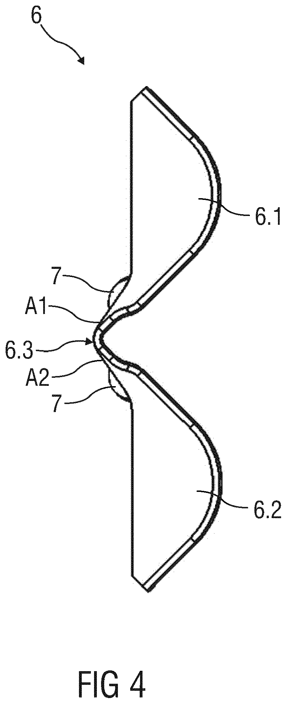

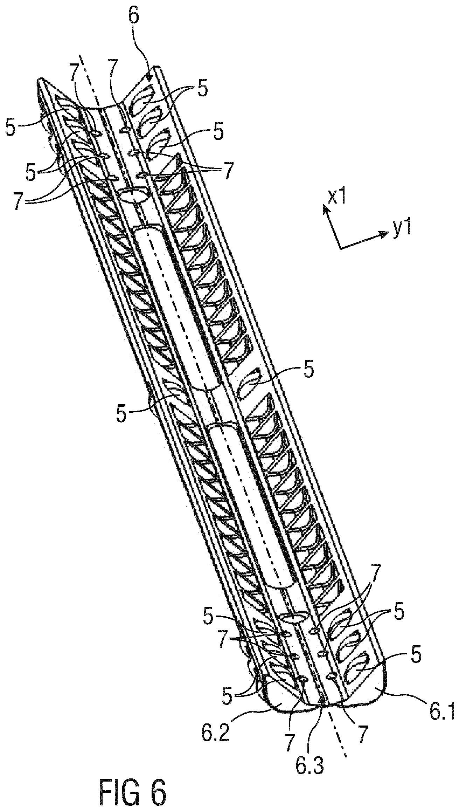

Der zur Aufnahme der Wälzkörper 5 vorgesehene Lagerkäfig 6 weist zwei axialsymmetrisch ausgebildete Käfigelemente 6.1, 6.2 auf, welche mittels eines an zugewandten Längsseiten der Käfigelemente 6.1, 6.2 zwischen diesen angeordneten, parallel zur in Figur 6 näher dargestellten Symmetrieachse S verlaufenden Verbindungselement 6.3 verbunden sind. Parallel zu der Symmetrieachse S verlaufende und in Figur 4 näher dargestellte Flachseiten A1, A2 des Verbindungselements 6.3 sind im montierten Zustand des Sitzschienenpaares 2 der Oberschiene 4 zugewandt und weisen jeweils Erhebungen 7 auf, welche in Richtung der Oberschiene 4 gerichtet sind.

Dabei ist der Lagerkäfig 6 mit den Wälzkörpern 5 derart zwischen der Innenseite der Unterschiene 3 und der Außenseite der innerhalb der Unterschiene 3 geführten Oberschiene 4 angeordnet, dass der zwischen den gebogenen Kontaktflächenbereichen 3.4, 3.5 der Unterschiene 3 ausgebildete flache Abschnitt 3.2 der Innenseite der Unterschiene 3 parallel zu den Flachseiten A1, A2 des Verbindungselements 6.3 des Lagerkäfigs 6 verläuft. Ein zwischen den zwei Kontaktflächenbereichen 4.2, 4.3 der Oberschiene 4 ausgebildeter gebogener Abschnitt 4.4 derselben ist den Flachseiten A1, A2 und Erhebungen 7 des Verbindungselements 6.3 zugewandt und liegt zumindest an den Erhebungen 7 an.

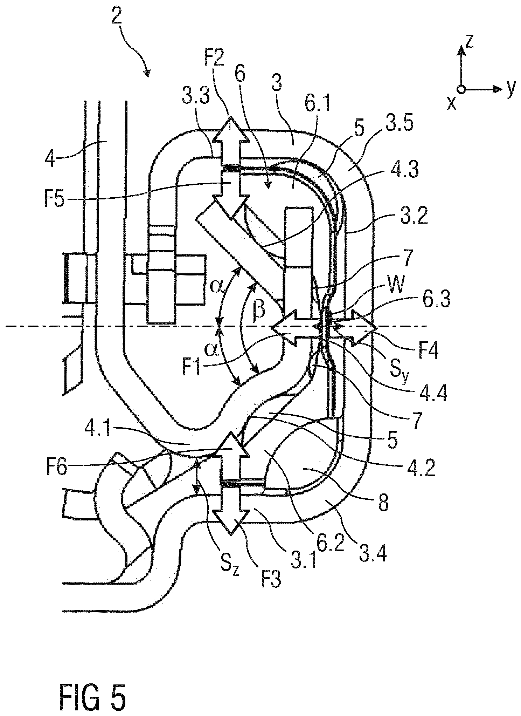

Darüber hinaus ist in Figuren 3 und 5 ein in der Unterschiene 3 angeordneter Endanschlag 8 gezeigt. Der Endanschlag 8 ist beispielsweise aus dem Material der Unterschiene 3 nach innen ausgestellt. Der Endanschlag 8 ist insbesondere korrespondierend zur Form der anschlagenden Stirnseite des Lagerkäfigs 6 ausgebildet und entsprechend geformt.

Das Verbindungselement 6.3 ist mechanisch flexibel ausgebildet und im Wesentlichen in der Art eines Scharniers um die Symmetrieachse S verformbar. Dabei ist das Verbindungselement 6.3 derart ausgebildet, dass dieses sich gemäß der Darstellung in Figur 4 verformt und somit im nicht verbauten oder nicht fixierten Zustand die Käfigelemente 6.1, 6.2 mit ihren äußeren Rückseiten aufeinander zu bewegt. Hierdurch wird eine Fixierung des Lagerkäfigs 6 innerhalb der Unterschiene 3 vor der Montage der Oberschiene 4 erzielt.

Aufgrund dieser in Figur 4 dargestellten selbsttätigen Verformung des Verbindungselements 6.3 aufgrund des Bestrebens, wie eine Feder in einen werkzeugfallenden oder entspannten Zustand zurückzukehren, erzeugt der Lagerkäfig 6 im montierten Zustand eine Federkraft F1 und aus dieser resultierende Kräfte F2, F3 auf die Unterschiene 3 und die Oberschiene 4.

Dies ist in Figur 5 am Beispiel des Ausschnitts der Stirnseite des Sitzschienenpaares 2 gemäß Figur 3 näher dargestellt.

Aufgrund der selbsttätigen Verformung des Lagerkäfigs 6 werden die Federkraft F1 und die Kräfte F2, F3 erzeugt, wobei aufgrund der Kräfte F2 und F3 Endabschnitte der Käfigelemente 6.1, 6.2 in Richtung der flachen Abschnitte 3.1, 3.3 der Unterschiene 3 gedrückt werden.

Die Unterschiene 3 weist in nicht näher dargestellter Weise beispielsweise zu einer Gewichtsreduzierung und/oder zum Eingriff einer Verriegelungsvorrichtung in die Unterschiene 3 vorgesehene Materialaussparungen und/oder -vertiefungen auf. Um bei einer relativen Verschiebung der Oberschiene 4 zur Unterschiene 3 ein aufgrund der Kräfte F2 und F3 hervorgerufenes Eingreifen und Verhaken der Endabschnitte der Käfigelemente 6.1, 6.2 in den Materialaussparungen und/oder-vertiefungen zu vermeiden, ist der Lagerkäfig 6 mit den Wälzkörpern 5 derart zwischen der Innenseite der Unterschiene 3 und der Außenseite der innerhalb der Unterschiene 3 geführten Oberschiene 4 angeordnet, dass der gebogene Abschnitt 4.4 der Außenseite der Oberschiene 4 eine Kraft F4 auf die Erhebungen 7 ausübt. Aufgrund dieser Kraft F4 werden an den Endabschnitten der Käfigelemente 6.1, 6.2 resultierende und den Kräften F2, F3 entgegenwirkende Kräfte F5, F6 erzeugt, so dass die Endabschnitte der Käfigelemente 6.1, 6.2 von dem jeweiligen flachen Abschnitt 3.1, 3.3 der Unterschiene 3 weggedrückt werden.

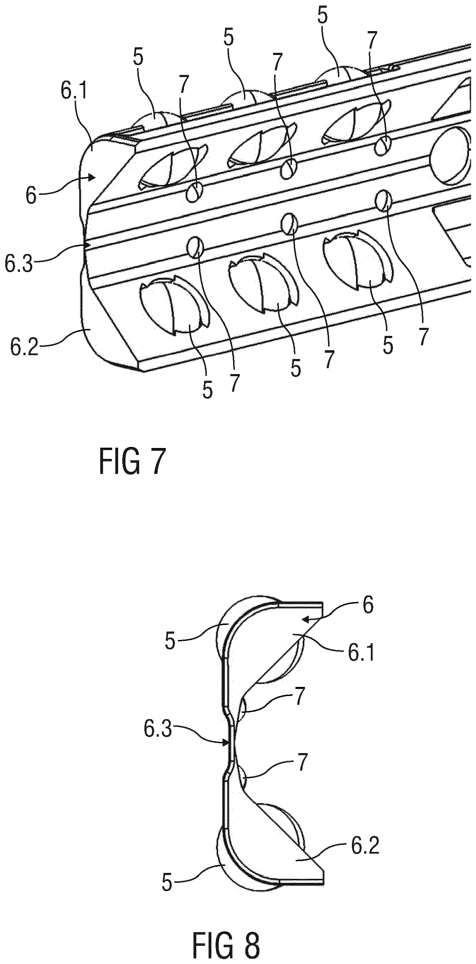

Die Figuren 6 bis 8 zeigen in verschiedenen Ansichten den Lagerkäfig 6 oder einen Ausschnitt desselben mit mehreren Wälzkörpern 5 in einer zweiten Stellung, d. h. einer Stellung, welcher dieser insbesondere im montierten Zustand des Sitzschienenpaares 2 aufweist.

Der Lagerkäfig 6 umfasst eine Mehrzahl von Erhebungen 7, welche jeweils als Kugelsegment ausgebildet sind. Hierbei sind in einem vorderen Endbereich und einem hinteren Endbereich des Lagerkäfigs 6 mehrere Erhebungen 7 beabstandet und parallel auf jeder Flachseite A1, A2 des Verbindungselements 6.3 angeordnet. Im dargestellten Ausführungsbeispiel umfasst der Lagerkäfig 6 2 Gruppen von Erhebungen 7, wobei jeweils eine Gruppe im vorderen Endbereich und eine Gruppe im hinteren Endbereich des Lagerkäfigs 6 angeordnet ist. Jede Gruppe umfasst sechs Erhebungen 7, wobei jeweils drei Erhebungen 7 auf der Flachseite A1 drei Erhebungen 7 auf der Flachseite A2 gegenüberliegend angeordnet sind.

Im dargestellten Ausführungsbeispiel des Lagerkäfigs 6 sind die Käfigelemente 6.1, 6.2 und das Verbindungselement 6.3 mit den Erhebungen 7 in Längsrichtung X1 und Querrichtung Y1 symmetrisch ausgebildet, so dass eine Fehlmontage des Lagerkäfigs 6 mit den Wälzkörpern 5 innerhalb des Sitzschienenpaares 2 wirkungsvoll vermieden werden kann.

Das heißt, auf jeder Seite des Lagerkäfigs 6 ist dieselbe Anzahl von Wälzkörpern 5 und dieselbe Anzahl von Erhebungen 7 an symmetrischen Positionen am Lagerkäfig 6 vorgesehen.

In nicht näher dargestellten Ausführungsbeispielen ist auch eine abweichende Anordnung und/oder Anzahl der Erhebungen 7 möglich.

### Bezugszeichenliste

- 1: Fahrzeugsitz
- 2: Sitzschienenpaar
- 3: Unterschiene
- 3.1 bis 3.3: Abschnitt
- 3.4, 3.5: Kontaktflächenbereich
- 4: Oberschiene
- 4.1: Abschnitt
- 4.2,4.3: Kontaktflächenbereich
- 4.4: Abschnitt
- 5: Wälzkörper
- 6: Lagerkäfig
- 6.1,6.2: Käfigelement
- 6.3: Verbindungselement
- 7: Erhebung
- 8: Endanschlag

- A1, A2: Flachseite
- F1: Federkraft
- F2 bis F6: Kraft
- L1 bis L4: Laufbahn
- S: Symmetrieachse
- S_{y}, S_{z}: Spaltmaß
- W: Zusammenwirkungsbereich
- X: Schienenlängsrichtung
- X1: Längsrichtung
- Y: Schienenquerrichtung
- Y1: Querrichtung
- Z: Schienenhochrichtung
- α: Anstellwinkel
- β: Winkel

## Patentansprüche

1. Lagerkäfig (6) für ein Sitzschienenpaar (2) eines Fahrzeugsitzes (1) mit zwei miteinander verbundenen Käfigelementen (6.1, 6.2) zur Aufnahme einer Anzahl von Wälzkörpern (5),
**dadurch gekennzeichnet, dass**
- die Käfigelemente (6.1, 6.2) axialsymmetrisch ausgebildet sind und
- an zugewandten Längsseiten der Käfigelemente (6.1, 6.2) zwischen diesen ein parallel zur Symmetrieachse (S) verlaufendes und mechanisch flexibel ausgebildetes Verbindungselement (6.3) angeordnet ist,
- wobei das Verbindungselement (6.3) als Feder ausgebildet ist und die Käfigelemente (6.1, 6.2) um die Symmetrieachse (S) schwenkbare Federschenkel bilden.

2. Lagerkäfig (6) nach Anspruch 1,
**dadurch gekennzeichnet, dass** einseitig an parallel zu der Symmetrieachse (S) verlaufenden Flachseiten (A1, A2) des Verbindungselements (6.3) jeweils Erhebungen (7) ausgebildet sind.

3. Lagerkäfig (6) nach Anspruch 2,
**dadurch gekennzeichnet, dass** die Erhebungen (7) jeweils als Kugelsegment ausgebildet sind.

4. Lagerkäfig (6) nach Anspruch 2 oder 3,
**dadurch gekennzeichnet, dass** die Käfigelemente (6.1, 6.2) und das Verbindungselement (6.3) mit den Erhebungen (7) in Längsrichtung (X1) und Querrichtung (Y1) symmetrisch ausgebildet sind.

5. Sitzschienenpaar (2) für einen Fahrzeugsitz (1), insbesondere einen Kraftfahrzeugsitz, umfassend
- eine Unterschiene (3) und eine relativ zur Unterschiene (3) in Schienenlängsrichtung (X) verschiebbar geführte Oberschiene (4), wobei die Unterschiene (3) und die Oberschiene (4) sich mit ihren Profilen gegenseitig hintergreifen, und
- zumindest einen zwischen der Unterschiene (3) und der Oberschiene (4) angeordneten Lagerkäfig (6) gemäß einem der vorhergehenden Ansprüche mit einer Mehrzahl von aufgenommenen Wälzkörpern (5), welche zwischen der Unterschiene (3) und der Oberschiene (4) in einem Zusammenwirkungsbereich (W) angeordnet sind,
- wobei das Verbindungselement (6.3) im montierten Zustand des Lagerkäfigs (6) gespannt ist.

6. Sitzschienenpaar (2) nach Anspruch 5,
**dadurch gekennzeichnet, dass** die Erhebungen (7) auf den Flachseiten (A1, A2) in Richtung einer von dem im montierten Zustand gespannten Verbindungselement (6.3) erzeugten Federkraft (F1) gerichtet sind.

7. Sitzschienenpaar (2) nach Anspruch 6,
**dadurch gekennzeichnet, dass** der Lagerkäfig (6) mit den Wälzkörpern (5) zwischen einer Innenseite der Unterschiene (3) und einer Außenseite der innerhalb der Unterschiene (3) geführten Oberschiene (4) angeordnet ist.

8. Sitzschienenpaar (2) nach Anspruch 7,
**dadurch gekennzeichnet, dass** an der Innenseite der Unterschiene (3) gebogene Kontaktflächenbereiche (3.4, 3.5) für die Wälzkörper (5) und der Außenseite der Oberschiene (4) gebogene und/oder flache Kontaktflächenbereiche (4.2, 4.3) für die Wälzkörper (5) ausgebildet sind, wobei jeweils ein Kontaktflächenbereich (3.4, 3.5) der Unterschiene (3) jeweils einem Kontaktflächenbereich (4.2, 4.3) der Oberschiene (4) gegenüberliegt.

9. Sitzschienenpaar (2) nach Anspruch 8,
**dadurch gekennzeichnet, dass** der Lagerkäfig (6) mit den Wälzkörpern (5) derart zwischen der Innenseite der Unterschiene (3) und der Außenseite der innerhalb der Unterschiene (3) geführten Oberschiene (4) angeordnet ist, dass ein zwischen den gebogenen Kontaktflächenbereichen (3.4, 3.5) der Unterschiene (3) ausgebildeter flacher Abschnitt (3.2) der Innenseite der Unterschiene (3) parallel zu den Flachseiten (A1, A2) des Verbindungselements (6.3) des Lagerkäfigs (6) verläuft und ein zwischen zwei Kontaktflächenbereichen (4.2, 4.3) der Oberschiene (4) ausgebildeter gebogener Abschnitt (4.4) derselben den Flachseiten (A1, A2) und den Erhebungen (7) zugewandt ist und zumindest an den Erhebungen (7) anliegt.

10. Sitzschienenpaar (2) nach Anspruch 9,
**dadurch gekennzeichnet, dass** der Lagerkäfig (6) mit den Wälzkörpern (5) derart zwischen der Innenseite der Unterschiene (3) und der Außenseite der innerhalb der Unterschiene (3) geführten Oberschiene (4) angeordnet ist, dass der gebogene Abschnitt (4.4) der Außenseite der Oberschiene (4) eine Kraft (F4) auf die Erhebungen (7) ausübt, wobei die Kraft (F4) der Federkraft (F1) des als Feder ausgebildeten Verbindungselements (6.3) entgegenwirkt.

11. Sitzschienenpaar (2) nach einem der Ansprüche 5 bis 10,
**dadurch gekennzeichnet, dass**
- die Unterschiene (3) und die Oberschiene (4) jeweils im Wesentlichen ein U-förmiges Profil aufweisen,
- wobei Schenkelenden der Unterschiene (3) und Oberschiene (4) derart mehrfach gebogen sind und einander hintergreifen, dass zwei seitliche innen liegende Zusammenwirkungsbereiche (W) zwischen der Unterschiene (3) und der Oberschiene (4) gebildet sind,
- wobei in jedem Zusammenwirkungsbereich (W) jeweils ein Lagerkäfig (6) mit einer Mehrzahl von aufgenommenen Wälzkörpern (5) angeordnet ist.

12. Fahrzeugsitz (1), umfassend zumindest ein Sitzschienenpaar (2) nach einem der Ansprüche 5 bis 11.

## Claims

1. Bearing cage (6) for a seat rail pair (2) of a vehicle seat (1), comprising two interconnected cage elements (6.1, 6.2) for receiving a number of rolling bodies (5),
**characterized in that**
- the cage elements (6.1, 6.2) are of axially symmetrical design, and
- on facing longitudinal sides of the cage elements (6.1, 6.2) between said elements there is arranged a connecting element (6.3) which runs parallel to the axis of symmetry (S) and is of mechanically flexible design,
- wherein the connecting element (6.3) is in the form of a spring, and the cage elements (6.1, 6.2) form spring legs which are pivotable about the axis of symmetry (S).

2. Bearing cage (6) according to Claim 1,
**characterized in that** elevations (7) are in each case formed on one side on flat sides (A1, A2) of the connecting element (6.3), said flat sides running parallel to the axis of symmetry (S).

3. Bearing cage (6) according to Claim 2,
**characterized in that** the elevations (7) are each in the form of a spherical segment.

4. Bearing cage (6) according to Claim 2 or 3,
**characterized in that** the cage elements (6.1, 6.2) and the connecting element (6.3) with the elevations (7) are formed symmetrically in the longitudinal direction (X1) and transverse direction (Y1).

5. Seat rail pair (2) for a vehicle seat (1), in particular a motor vehicle seat, comprising
- a lower rail (3) and an upper rail (4) which is guided displaceably in the rail longitudinal direction (X) relative to the lower rail (3), wherein the lower rail (3) and the upper rail (4) mutually engage behind each other with their profiles, and
- at least one bearing cage (6), which is arranged between the lower rail (3) and the upper rail (4), according to one of the preceding claims, comprising a plurality of accommodated rolling bodies (5) which are arranged in a region of interaction (W) between the lower rail (3) and the upper rail (4),
- wherein the connecting element (6.3) is tensioned in the mounted state of the bearing cage (6).

6. Seat rail pair (2) according to Claim 5,
**characterized in that** the elevations (7) on the flat sides (A1, A2) are directed in the direction of a spring force (F1) generated by the connecting element (6.3), which is tensioned in the mounted state.

7. Seat rail pair (2) according to Claim 6,
**characterized in that** the bearing cage (6) with the rolling bodies (5) is arranged between an inner side of the lower rail (3) and an outer side of the upper rail (4), which is guided within the lower rail (3) .

8. Seat rail pair (2) according to Claim 7,
**characterized in that** bent contact surface regions (3.4, 3.5) for the rolling bodies (5) are formed on the inner side of the lower rail (3), and bent and/or flat contact surface regions (4.2, 4.3) for the rolling bodies (5) are formed on the outer side of the upper rail (4), wherein in each case one contact surface region (3.4, 3.5) of the lower rail (3) lies opposite in each case one contact surface region (4.2, 4.3) of the upper rail (4).

9. Seat rail pair (2) according to Claim 8,
**characterized in that** the bearing cage (6) with the rolling bodies (5) is arranged between the inner side of the lower rail (3) and the outer side of the upper rail (4), which is guided within the lower rail (3), in such a manner that a flat portion (3.2) of the inner side of the lower rail (3), said flat portion being formed between the bent contact surface regions (3.4, 3.5) of the lower rail (3), runs parallel to the flat sides (A1, A2) of the connecting element (6.3) of the bearing cage (6), and a bent portion (4.4) of the upper rail (4), which is formed between two contact surface regions (4.2, 4.3) thereof, faces the flat sides (A1, A2) and the elevations (7) and lies at least against the elevations (7).

10. Seat rail pair (2) according to Claim 9,
**characterized in that** the bearing cage (6) with the rolling bodies (5) is arranged between the inner side of the lower rail (3) and the outer side of the upper rail (4), which is guided within the lower rail (3), in such a manner that the bent portion (4.4) of the outer side of the upper rail (4) exerts a force (F4) on the elevations (7), wherein the force (F4) counteracts the spring force (F1) of the connecting element (6.3), which is in the form of a spring.

11. Seat rail pair (2) according to one of Claims 5 to 10,
**characterized in that**
- the lower rail (3) and the upper rail (4) each substantially have a U-shaped profile,
- wherein leg ends of the lower rail (3) and upper rail (4) are repeatedly bent and engage behind one another in such a manner that two lateral, inner regions of interaction (W) are formed between the lower rail (3) and the upper rail (4),
- wherein a respective bearing cage (6) with a plurality of accommodated rolling bodies (5) is arranged in each region of interaction (W).

12. Vehicle seat (1) comprising at least one seat rail pair (2) according to one of Claims 5 to 11.

## Revendications

1. Cage de palier (6) pour une paire (2) de rails de siège d'un siège de véhicule (1), comprenant deux éléments de cage (6.1, 6.2) reliés l'un à l'autre pour recevoir un certain nombre de corps de roulement (5),
**caractérisée en ce que**
- les éléments de cage (6.1, 6.2) sont réalisés de manière axialement symétrique et
- sur des côtés longitudinaux en regard l'un de l'autre des éléments de cage (6.1, 6.2), entre ceux-ci, est disposé un élément de liaison (6.3) s'étendant parallèlement à l'axe de symétrie (S) et réalisé de manière mécaniquement flexible,
- l'élément de liaison (6.3) étant réalisé sous forme de ressort et les éléments de cage (6.1, 6.2) formant des branches de ressort pouvant pivoter autour de l'axe de symétrie (S).

2. Cage de palier (6) selon la revendication 1,
**caractérisée en ce que** des rehaussements (7) sont réalisés respectivement de manière unilatérale sur des côtés plats (A1, A2) de l'élément de liaison (6.3) qui s'étendent parallèlement à l'axe de symétrie (S).

3. Cage de palier (6) selon la revendication 2,
**caractérisée en ce que** les rehaussements (7) sont réalisés respectivement sous forme de segments sphériques.

4. Cage de palier (6) selon la revendication 2 ou 3,
**caractérisée en ce que** les éléments de cage (6.1, 6.2) et l'élément de liaison (6.3) doté des rehaussements (7) sont réalisés de manière symétrique dans la direction longitudinale (X1) et dans la direction transversale (Y1).

5. Paire (2) de rails de siège pour un siège de véhicule (1), en particulier un siège de véhicule automobile, comportant
- un rail inférieur (3) et un rail supérieur (4) guidé de manière coulissante par rapport au rail inférieur (3) dans la direction longitudinale de rail (X), le rail inférieur (3) et le rail supérieur (4) venant en prise mutuellement l'un derrière l'autre par leurs profils, et
- au moins une cage de palier (6), disposée entre le rail inférieur (3) et le rail supérieur (4), selon l'une des revendications précédentes, comprenant une pluralité de corps de roulement (5) reçus, lesquels sont disposés entre le rail inférieur (3) et le rail supérieur (4) dans une région de coopération (W),
- l'élément de liaison (6.3) étant tendu dans l'état monté de la cage de palier (6).

6. Paire (2) de rails de siège selon la revendication 5,
**caractérisée en ce que** les rehaussements (7) sur les côtés plats (A1, A2) sont orientés en direction d'une force de ressort (F1) produite par l'élément de liaison (6.3) tendu dans l'état monté.

7. Paire (2) de rails de siège selon la revendication 6,
**caractérisée en ce que** la cage de palier (6) dotée des corps de roulement (5) est disposée entre un côté intérieur du rail inférieur (3) et un côté extérieur du rail supérieur (4) guidé à l'intérieur du rail inférieur (3).

8. Paire (2) de rails de siège selon la revendication 7,
**caractérisée en ce que** des régions de surface de contact (3.4, 3.5) courbes pour les corps de roulement (5) sont réalisées sur le côté intérieur du rail inférieur (3) et des régions de surface de contact (4.2, 4.3) courbes et/ou plates pour les corps de roulement (5) sont réalisées sur le côté extérieur du rail supérieur (4), une région de surface de contact (3.4, 3.5) du rail inférieur (3) étant respectivement en regard d'une région de surface de contact (4.2, 4.3) du rail supérieur (4) .

9. Paire (2) de rails de siège selon la revendication 8,
**caractérisée en ce que** la cage de palier (6) dotée des corps de roulement (5) est disposée entre le côté intérieur du rail inférieur (3) et le côté extérieur du rail supérieur (4) guidé à l'intérieur du rail inférieur (3), de telle sorte qu'une partie plate (3.2) du côté intérieur du rail inférieur (3) réalisée entre les régions de surface de contact (3.4, 3.5) courbes du rail inférieur (3) s'étend parallèlement aux côtés plats (A1, A2) de l'élément de liaison (6.3) de la cage de palier (6) et une partie courbe (4.4) du rail supérieur réalisée entre deux régions de surface de contact (4.2, 4.3) du rail supérieur (4) est tournée vers les côtés plats (A1, A2) et les rehaussements (7) et s'appuie au moins contre les rehaussements (7).

10. Paire (2) de rails de siège selon la revendication 9,
**caractérisée en ce que** la cage de palier (6) dotée des corps de roulement (5) est disposée entre le côté intérieur du rail inférieur (3) et le côté extérieur du rail supérieur (4) guidé à l'intérieur du rail inférieur (3), de telle sorte que la partie courbe (4.4) du côté extérieur du rail supérieur (4) exerce une force (F4) sur les rehaussements (7), la force (F4) s'opposant à la force de ressort (F1) de l'élément de liaison (6.3) réalisé sous forme de ressort.

11. Paire (2) de rails de siège selon l'une des revendications 5 à 10,
**caractérisée en ce que**
- le rail inférieur (3) et le rail supérieur (4) présentent respectivement sensiblement un profil en forme de U,
- des extrémités de branche du rail inférieur (3) et du rail supérieur (4) étant courbées plusieurs fois et venant en prise les unes derrière les autres de telle sorte que deux régions de coopération (W) situées latéralement à l'intérieur soient formées entre le rail inférieur (3) et le rail supérieur (4),
- une cage de palier (6) dotée d'une pluralité de corps de roulement (5) reçus étant respectivement disposée dans chaque région de coopération (W).

12. Siège de véhicule (1), comportant au moins une paire (2) de rails de siège selon l'une des revendications 5 à 11.
